# EUROPÄISCHE PATENTSCHRIFT

(11) **EP 3 544 880 B1**
(45) Veröffentlichungstag und Bekanntmachung des Hinweises auf die Patenterteilung: **03.08.2022**
(21) Anmeldenummer: 17811876.6
(22) Anmeldetag: 24.11.2017
(51) Int. Cl.: B62D 35/02

(54) **LUFTLEITVORRICHTUNG ZUR VERWENDUNG AN DER UNTERSEITE EINES KRAFTFAHRZEUGS**
AIR DEFLECTING DEVICE FOR USE ON THE BOTTOM OF A MOTOR VEHICLE
DISPOSITIF DE GUIDAGE D'AIR À UTILISER SUR LA FACE INFÉRIEURE D'UN VÉHICULE À MOTEUR

(30) Priorität: 24.11.2016 DE 102016223351
(43) Veröffentlichungstag der Anmeldung: 02.10.2019
(73) Patentinhaber: Bayerische Motoren Werke Aktiengesellschaft, 80809 München (DE)
(72) Erfinder: RANFT, Tino, 80995 München (DE); FAUSER, Markus, 81379 München (DE)
(86) Internationale Anmeldenummer: PCT/EP2017/080395
(87) Internationale Veröffentlichungsnummer: WO 2018/096113

(56) Entgegenhaltungen:
- WO-A2-2007/074381
- JP-A- H10 278 854
- JP-A- 2006 069 396
- JP-A- 2008 201 156

## Beschreibung

### TECHNISCHES GEBIET

Die Erfindung betrifft ein Verfahren zur Verstellung einer Luftleitvorrichtung an der Unterseite eines Kraftfahrzeugs vor einem Fahrzeugrad gemäß den Patentansprüchen 1 und 4.

### STAND DER TECHNIK

Aus der EP 1 674 381 B1 ist eine Luftleitvorrichtung für ein Fahrzeug bekannt, die im Bereich vor einem Fahrzeugrad angeordnet ist und nach unten in Richtung Fahrbahn absteht. Derartige Luftleitvorrichtungen dienen dazu, die während der Fahrt auf das Fahrzeug einwirkende Luftströmung, also den Fahrtwind, am Fahrzeugrad vorbei zu leiten, um möglichst ein Zusammentreffen des Fahrtwindes mit dem Fahrzeugrad zu verhindern. Diese herkömmlichen Luftleitvorrichtungen sind in ihren Abmessungen auf das jeweils am Fahrzeug montierte Fahrzeugrad abgestimmt, werden zum Beispiel breitere Räder am Fahrzeug montiert, kann es zu einem unerwünschten Zusammentreffen des Fahrtwindes mit dem Fahrzeugrad und dessen Umgebung kommen. Daher werden üblicherweise unterschiedlich breite Luftleitvorrichtungen vorgehalten und bei der Fahrzeugfertigung werden jene Luftleitvorrichtungen montiert, die an die am Fahrzeug vorgesehenen Räder angepasst sind. Dies führt zu einer komplexeren und aufwändigeren Lagerhaltung und zu einer aufwändigen Teilebereitstellung am Fahrzeug-Montageband.

WO 2007/074381 A2 offenbart eine einstellbare Luftleitvorrichtung, die sich an der Unterseite eines Fahrzeugs vor jedem Rad befindet. Die Vorrichtung umfasst mehrere Elemente, die selektiv gegeneinander beweglich sind, um die Größe und Position der Vorrichtung dynamisch zu steuern.

### DARSTELLUNG DER ERFINDUNG

Aufgabe der vorliegenden Erfindung ist es, ein Verfahren anzugeben, mit dem es möglich ist, die Lagerhaltung und die Teilebereitstellung bei der Fertigung zu vereinfachen, wobei das Verfahren auch bei nachträglich an einem Kraftfahrzeug anzubringenden Rädern, die sich von den herstellerseitig montierten Rädern unterscheiden, vorteilhaft sein soll.

Diese Aufgabe wird gelöst durch ein Verfahren gemäß den Patentansprüchen 1 oder 4.

Die erfindungsgemäßen Verfahren zeichnen sich dadurch aus, dass der Luftleitkörper zumindest zwei Luftleitkörperelemente aufweist, mittels derer die Erstreckung des Luftleitkörpers in Fahrzeugquerrichtung veränderbar ist.

### VORTEILE

Durch diese erfindungsgemäße Lösung wird eine verstellbare Luftleitvorrichtung geschaffen, bei der die Breite des Luftleitkörpers (in Fahrzeugquerrichtung gesehen) auf einfache Weise an die Räderausstattung des Fahrzeugs anpassbar ist. Es ist somit lediglich nur noch ein Typ Luftleitvorrichtung zu bevorraten und den Montagearbeitern am Fertigungsband bereitzustellen. Außerdem wird durch das Vorsehen der erfindungsgemäßen Luftleiteinrichtung verhindert, dass ein für die Bremsenkühlung vorgesehener Luftstrom abgelenkt oder anderweitig negativ beeinflusst wird. Auch wird verhindert, dass unkontrolliert unter das Fahrzeug strömende Luft die Auftriebsverteilung negativ beeinflusst und insbesondere den Achsauftrieb vergrößert.

Der Kern der Erfindung besteht darin, eine Luftleitvorrichtung in ihrer Breitenerstreckung veränderbar auszugestalten, so dass sie in einfacher und kostengünstiger Weise an ein Fahrzeugrad angepasst werden kann, insbesondere an die Breite und/oder an die Gestaltung eines Rades, insbesondere eines Vorderrades eines Fahrzeugs. Ziel ist die Optimierung wenigstens eines aerodynamischen Kennwertes, wie beispielsweise des Luftwiderstands und/oder des Achsauftriebs. Insbesondere soll mit der Anpassung der Luftleitvorrichtung der Luftwiderstandsbeiwert cₓ und/oder der Auftrieb an der Vorderachse eines Fahrzeugs verringert werden.

Durch die erfindungsgemäß vorgesehene Veränderbarkeit der Breitenerstreckung des Luftleitkörpers wird die Luftströmung, die sich bei Vorwärtsfahrt des Fahrzeugs einstellt, so an dem Rad, insbesondere einem Vorderrad des Fahrzeugs, vorbeigeführt und/oder an einem Rad, insbesondere einem Vorderrad des Fahrzeugs, entlanggeführt, dass möglichst geringe Strömungsverluste entstehen und somit der Luftwiderstand verringert wird. Da es in der Regel nicht möglich ist, das Rad vollständig von der Anströmung freizuhalten, ist es das Ziel, einen möglichst großen Anteil der Luftströmung am Rad vorbeizuführen und/oder die Luftströmung möglichst parallel zur Längsachse des Fahrzeugs auszurichten.

Durch das Vorbeiführen der Luftströmung am Rad wird der Anteil der Luftströmung reduziert, der auf das rotierende Rad auftrifft und hierbei infolge von Verwirbelungen eine Erhöhung des Luftwiderstands bewirkt. Das Auftreffen der Luftströmung auf das rotierende Rad beinhaltet das Auftreffen auf die Lauffläche des Rades und/oder auf eine und/oder beide Seitenflächen des Rades (infolge von Schräganströmung des Rades) und/oder einen Luftdurchtritt schräg oder quer durch das Rad.

Durch die erfindungsgemäß vorgesehene Veränderbarkeit der Breitenerstreckung des Luftleitkörpers ist es grundsätzlich möglich, einen oder mehrere dieser den Luftwiderstand erhöhenden Faktoren in vorteilhafter Weise zu beeinflussen.

Bevorzugt wird durch die erfindungsgemäß vorgesehene Veränderbarkeit der Breitenerstreckung des Luftleitkörpers die Breite des Luftleitkörpers auf die Breite des Rades, insbesondere des Vorderrades des Fahrzeugs, abgestimmt.

Zusätzlich oder alternativ wird durch die erfindungsgemäß vorgesehene Veränderbarkeit der Breitenerstreckung des Luftleitkörpers die Luftströmung so gerichtet, dass die seitliche Anströmung des Rades in aerodynamisch vorteilhafter Weise beeinflusst wird.

Zusätzlich oder alternativ wird durch die erfindungsgemäß vorgesehene Veränderbarkeit der Breitenerstreckung des Luftleitkörpers die Luftströmung so gerichtet, dass die Durchströmung des Rades in aerodynamisch vorteilhafter Weise beeinflusst wird.

Je nach Ausführung des Rades, insbesondere der so genannten Radscheibe des Rades, stellt sich eine unterschiedliche Durchströmung des Rades ein. Mit anderen Worten ist der Volumenstrom und/oder die Richtung der Luftströmung durch die Radscheibe von der Gestaltung des Rades, insbesondere der Radscheibe, abhängig. Die Radscheibe ist derjenige Bereich des Rades, der den Nabenbereich des Rades mit dem Felgenbereich des Rades, also dem Aufnahmebereich für den Reifen, verbindet. Die Radscheibe kann beispielsweise im Wesentlichen die Form einer Ringfläche mit Durchbrüchen haben. Diese Form ist vor allen bei Stahlrädern gegeben. Alternativ kann die Radscheibe nach Art von Speichen ausgebildet sein, mit Freiräumen zwischen den Speichen. Diese Form ist vor allem bei Leichtmetallrädern gegeben. Durch die Gestaltung der Radscheibe (Form und/oder Anzahl und/oder Fläche der Durchbrüche) wird die Durchströmung beeinflusst. Die Richtung und das Ausmaß der Durchströmung kann durch eine Veränderung der Breite des Luftleitkörpers derart angepasst werden, dass eine Optimierung in aerodynamischer Hinsicht erfolgt.

Neben den Vorteilen bei der Herstellung von Fahrzeugen ist die Erfindung auch dann vorteilhaft, wenn an einem Fahrzeug nachträglich andere Räder angebracht werden. Die nachträglich montierten Räder können sich in der Breite und/oder im Durchströmungsverhalten von den herstellerseitig montierten Rädern unterscheiden. Durch Veränderung der Breitenerstreckung der Luftleitkörper kann eine Anpassung an die Breite und/oder das Durchströmungsverhalten der nachträglich montierten Räder erfolgen. Hierzu kann der Fahrzeughersteller oder ein Hersteller von Rädern durch Messungen, Simulationen oder Berechnungen die optimale Breite der Luftleitkörper ermitteln und diese Daten dem Fahrzeughalter zur Verfügung stellen.

Beispielsweise ändert sich beim Wechsel von Sommerrädern auf Winterräder häufig die Breite des Rades. Auch können die Winterräder ein von den Sommerrädern unterschiedliches Durchströmungsverhalten aufweisen. So sind Winterräder beispielsweise häufig schmäler und/oder mit weniger Luftdurchlassfläche der Radscheibe versehen als Sommerräder, insbesondere, wenn Winterräder als Stahlräder ausgeführt sind.

Gemäß dem Verfahren nach Patentanspruch 1 sind die Luftleitkörperelemente relativ zueinander verschiebbar. Dadurch kann die Breite des Luftleitkörpers durch relatives Verschieben der Luftleitkörperelemente zueinander schnell und bedarfsgerecht manuell angepasst werden.

Dabei ist es auch von Vorteil, wenn die relative Verschiebbarkeit der Luftleitkörperelemente in Raststufen ausgebildet ist, so dass unterschiedliche Breiten des Luftleitkörpers in Fahrzeugquerrichtung einstellbar sind, wobei Rast- und/oder Fixiereinrichtungen vorgesehen sind, um die Luftleitkörperelemente relativ zueinander zu positionieren und/oder zu fixieren. Dies ermöglicht es, die einzelnen Luftleitvorrichtungen zuverlässig und nachhaltig in ihre gewünschte Längserstreckung zu bringen.

Alternativ können die Luftleitkörperelemente durch eine Klemmeinrichtung relativ zueinander fixiert werden. Die Klemmeinrichtung kann so ausgeführt sein, dass eine stufenlose Einstellbarkeit der Breite des Luftleitkörpers ermöglicht wird.

Gemäß dem Verfahren nach Patentanspruch 4 sind die Luftleitkörperelemente an einer Unterstruktur nebeneinander anbringbar. Diese Alternativlösung sieht vor, dass die Luftleitkörperelemente bausteinartig zu einem Luftleitkörper mit den gewünschten Abmessungen zusammengesetzt werden können.

Zwar ist aus der WO 2007/074381 A2 ein Kraftfahrzeug bekannt, bei dem Luftleitkörper in Abhängigkeit vom Fahrzustand verstellbar sind. Die Verstellung erfolgt durch eine gezielte Ausrichtung und/oder eine Veränderung der Größe der Luftleitkörper, in Abhängigkeit vom Schräglaufwinkel des Kraftfahrzeugs. Hierdurch wird die Stabilität des Kraftfahrzeugs und die Kontrolle über das Kraftfahrzeug bei Kurvenfahrt verbessert. So wird beispielsweise das Fahrverhaltens des Kraftfahrzeugs bei untersteuernder und übersteuernder Kurvenfahrt beeinflusst. Die WO 2007/074381 A2 gibt jedoch keinen Hinweis darauf, einen Luftleitkörper mit zumindest zwei Luftleitkörperelementen zu versehen, mittels derer die Breitenerstreckung des Luftleitkörpers in Fahrzeugquerrichtung so veränderbar ist, dass die Breite des Luftleitkörpers an die Breite des Rades und/oder die Gestaltung des Rades anpassbar ist.

In einer vorteilhaften Ausführungsform weist die Luftleitvorrichtung eine Montagebasis auf, an der die Luftleitkörperelemente angebracht oder anbringbar sind oder mit der zumindest eines der Luftleitkörperelemente integral ausgebildet ist.

Vorzugsweise kommt das Verfahren gemäß den Patentansprüchen 1 oder 4 bei einem Kraftfahrzeug mit zumindest einem Vorderrad zum Einsatz, wobei in Fahrtrichtung vor dem Vorderrad zumindest eine erfindungsgemäße Luftleitvorrichtung am Unterboden des Kraftfahrzeugs so angeordnet ist, dass der jeweilige Luftleitkörper vom Unterboden zur Fahrbahn hin vorsteht. Ein so ausgestattetes Kraftfahrzeug ist kostengünstiger zu fertigen, da nur noch ein Typ Luftleitvorrichtung für jede Fahrzeugseite bevorratet zu werden braucht.

In besonders vorteilhafter Weise ist der Luftleitkörper dabei ausschließlich im Bereich unmittelbar vor einem Rad, insbesondere einem Vorderrad, des Fahrzeugs angeordnet. Derartige Luftleitkörper werden auch als "Radspoiler" bezeichnet.

Aufgrund des unmittelbaren Zusammenspiels zwischen dem erfindungsgemäßen Luftleitkörper und dem Rad ist der Luftleitkörper bevorzugt in geringem Abstand vordem Rad angeordnet (in Fahrtrichtung des Fahrzeugs betrachtet). Bevorzugt ist eine hintere Fläche des Luftleitkörpers gleich oder weniger als 25 Zentimeter zum vordersten Bereich der Lauffläche des Rades beabstandet. In besonders bevorzugter Ausgestaltung ist eine hintere Fläche des Luftleitkörpers gleich oder weniger als 15 Zentimeter zum vordersten Bereich der Lauffläche des Rades beabstandet.

Die Mitte des Luftleitkörpers kann - in Bezug auf die Querrichtung des Fahrzeugs - im Wesentlichen mit der Mitte des Rades fluchten. Bevorzugt ist die Mitte des Luftleitkörpers gegenüber der Mitte des Rades nach innen in Richtung der Fahrzeugmitte versetzt.

Der Luftleitkörper kann in etwa die Breite des Rades aufweisen. Bevorzugt ist der Luftleitkörper breiter als das Rad.

Von Vorteil ist dabei, wenn das Fahrzeug ein zweispuriges Fahrzeug mit zwei seitlich voneinander beabstandet am Fahrzeug vorgesehenen Vorderrädern ist und wenn vor jedem der beiden Vorderräder zumindest eine erfindungsgemäße Luftleitvorrichtung vorgesehen ist.

Die beiden erfindungsgemäßen Luftleitvorrichtungen sind ausschließlich im Bereich unmittelbar vor dem jeweiligen Rad angeordnet (in Fahrtrichtung des Fahrzeugs betrachtet). Somit ist im Bereich zwischen den Rädern keine erfindungsgemäße Luftleiteinrichtung vorgesehen.

Bei einer bevorzugten Ausführungsform eines erfindungsgemäßen Kraftfahrzeugs sind die vor einem jeweiligen Vorderrad vorgesehenen Luftleiteinrichtungen spiegelbildlich zueinander gestaltet, wodurch eine optimierte aerodynamische Gestaltung des Kraftfahrzeugs erzielt wird.

Die beiden Luftleitkörper sind in Bezug auf eine Mittellängsebene (X-Z-Ebene) des Fahrzeugs bevorzugt symmetrisch angeordnet.

Die erfindungsgemäße Luftleiteinrichtung ist zu unterscheiden von einer sich über einen wesentlichen Teil der Fahrzeugbreite erstreckenden Luftleiteinrichtung. Derartige Luftleiteinrichtungen sind meist an einer Verkleidung eines vorderen Stoßfängers angeordnet und werden im allgemeinen Sprachgebrauch als "Frontspoiler" bezeichnet. Sie decken vor allem den Mittenbereich des Fahrzeugs ab und beeinflussen damit vor allem die Luftströmung im Mittenbereich des Unterbodens des Fahrzeugs. Sie sind - in Fahrtrichtung des Fahrzeugs betrachtet - mit größerem Abstand zu den Rädern des Fahrzeugs angeordnet als die erfindungsgemäßen Luftleitkörper. Die bekannten Frontspoiler sind in ihrer aerodynamischen Wirkung nicht auf die Breite und/oder die Gestaltung der dahinter liegenden Räder abgestimmt.

Bevorzugte Ausführungsbeispiele der Erfindung mit zusätzlichen Ausgestaltungsdetails und weiteren Vorteilen sind nachfolgend unter Bezugnahme auf die beigefügte Zeichnung näher beschrieben und erläutert.

### KURZE BESCHREIBUNG DER ZEICHNUNGEN

Es zeigt:
- Fig. 1: eine Unteransicht eines mit erfindungsgemäßen Luftleitvorrichtungen ausgestatteten Kraftfahrzeugs schräg von vorne;
- Fig. 2: eine perspektivische Darstellung einer erfindungsgemäßen Luftleitvorrichtung in einem ersten Zustand mit einer minimalen Erstreckung in Fahrzeugquerrichtung;
- Fig. 3: die erfindungsgemäße Luftleitvorrichtung aus Fig. 2 in einem zweiten Zustand mit einer vergrößerten Erstreckung in Fahrzeugquerrichtung und
- Fig. 4.: die erfindungsgemäße Luftleitvorrichtung aus Fig. 2 in einem dritten Zustand mit einer maximalen Erstreckung in Fahrzeugquerrichtung.

### DARSTELLUNG VON BEVORZUGTEN AUSFÜHRUNGSBEISPIELEN

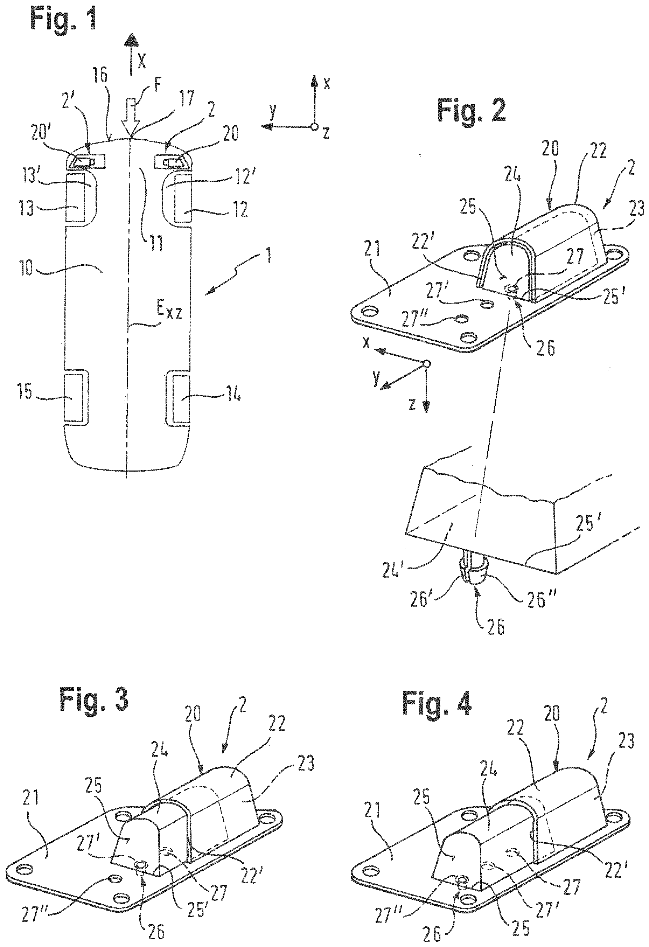

Fig. 1 zeigt eine Unteransicht eines als Kraftfahrzeug ausgebildeten Fahrzeugs 1 mit einem Fahrzeugunterboden 10, einem in Fahrtrichtung X gesehen linken Vorderrad 12, einem rechten Vorderrad 13, einem linken Hinterrad 14 und einem rechten Hinterrad 15.

Vor dem linken Vorderrad 12 ist eine unten noch näher beschriebene, einen Luftleitkörper 20 aufweisende linksseitige Luftleitvorrichtung 2 am vorderen Teil 11 des Fahrzeugunterbodens 10 vor dem Radhaus 12' des linken Vorderrads 12 angeordnet. Eine spiegelsymmetrisch gestaltete, einen Luftleitkörper 20' aufweisende rechtsseitige Luftleitvorrichtung 2' ist in analoger Weise vor dem Radhaus 13' des rechten Vorderrads 13 am vorderen Teil 11 des Fahrzeugunterbodens 10 angeordnet.

Während der Vorwärtsfahrt wird die Fahrzeugfront 16 vom Fahrtwind F angeströmt. Die anströmende Luft wird von dem am vordersten Punkt der Fahrzeugfront (zum Beispiel im Bereich des Zulassungskennzeichens) gelegenen aerodynamischen Staupunkt 17 des Fahrzeugs 1 zum Teil über das Fahrzeug 1 geleitet und zum Teil unter das Fahrzeug 1 gedrängt, wo diese so genannte Unterströmung zwischen dem Fahrzeugunterboden 10 und einer (nicht gezeigten) Fahrbahn hindurchströmt. Die auf das Fahrzeug 1 auftreffende Luft wird vom Fahrzeug 1 jedoch nicht nur bezüglich der Fahrzeughochachse z verdrängt, sondern auch bezüglich der Fahrzeugquerachse y. Dementsprechend wird ein Teil der anströmenden Luft vom Staupunkt 17 schräg nach links und ein anderer Teil der anströmenden Luft schräg nach rechts geleitet. Dies trifft sowohl für die nach oben abgelenkte Luftströmung als auch für die nach unten abgelenkte Luftströmung zu.

Folglich weist die Unterströmung des Fahrzeugs 1 seitliche Strömungsbereiche auf, in denen die Luft von der Fahrzeug-Längsmittelebene E_{xz} schräg zur linken beziehungsweise rechten Seite strömt. Die Vorderräder 12, 13, die für die Unterströmung aerodynamische Hindernisse darstellen, werden daher jeweils schräg von innen angeströmt, was aerodynamisch ungünstig ist und den gesamten Strömungswiderstand des Fahrzeugs 1 erhöht.

Um eine möglichst gerade Anströmung des jeweiligen Vorderrades 12, 13 direkt von vorne zu erzielen, ist vor dem jeweiligen Vorderrad 12, 13 die linke beziehungsweise rechte Luftleitvorrichtung 2, 2' am Fahrzeugunterboden 10 vorgesehen, die den schräg auf sie auftreffenden Luftstrom umlenkt und von vorne so in Richtung auf das zugehörige Vorderrad 12, 13 lenkt, dass diese umgelenkte Luftströmung innen und außen am Vorderrad 12, 13 vorbei geleitet wird und möglichst nicht auf die Stirnfläche (Reifen-Lauffläche) des Vorderrades 12, 13 auftrifft. Die Erfüllung dieses Kriteriums ist unmittelbar von der Breite des Vorderrades 12, 13 abhängig, so dass die jeweilige Luftleitvorrichtung 2, 2' an die Breite des zugeordneten Vorderrades 12, 13 angepasst sein muss.

Anstatt in Abhängigkeit von der Breite der am Fahrzeug 1 montierten Vorderräder 12, 13 unterschiedliche Luftleitvorrichtungen vorzusehen, wird erfindungsgemäß eine variabel verstellbare Luftleitvorrichtung 2, 2' geschaffen und verwendet. Diese variabel verstellbare Luftleitvorrichtung 2, 2' wird nachstehend unter Bezugnahme auf die Fig. 2 bis Fig. 4 beschrieben. Wegen der spiegelsymmetrischen Gestaltung der Luftleitvorrichtungen 2, 2' wird nur die linksseitige Luftleitvorrichtung 2 näher beschrieben; die folgenden Ausführungen gelten daher analog auch für die rechtsseitige Luftleitvorrichtung 2'.

Die Luftleitvorrichtung 2 weist einen vom Fahrzeugunterboden 10 nach unten zur Fahrbahn hin vorstehenden, eingangs bereits als Luftleitkörper bezeichneten aerodynamischen Staukörper 20 auf, der die anströmende Luft in der oben beschriebenen Weise umlenkt. Der Staukörper 20 weist seinerseits ein erstes Luftleitkörperelement 22 auf, das entweder auf einer zur Verbindung mit dem Fahrzeugunterboden 10 ausgebildeten Montagebasis 21 angebracht oder einstückig mit dieser ausgebildet ist oder das direkt am Fahrzeugunterboden 10 anbringbar ist.

Das erste Luftleitkörperelement 22 ist zumindest bereichsweise mit einem Hohlraum 23 ausgebildet und an einer Seite, vorzugsweise an der zur Fahrzeuglängsmittelebene E_{xz} weisenden Seite 22', offen. Die verbleibenden Seiten des ersten Luftleitkörperelements 22 sind geschlossen, wobei allerdings die zum Vorderrad 12 weisende Rückseite auch offen sein kann. In den Hohlraum 23 ist ein zweites Luftleitkörperelement 24 eingesetzt, das durch die offene Seite 22' des ersten Luftleitkörperelements 22 aus dem Hohlraum 23 herausbewegbar ist.

In Fig. 2 ist das zweite Luftleitkörperelement 24 nahezu vollständig vom Hohlraum 23 aufgenommen und die zur Fahrzeuglängsmittelebene E_{xz} weisende innere Stirnseite 25 des zweiten Luftleitkörperelements 24 verschließt im Wesentlichen die offene Seite 22' des ersten Luftleitkörperelements 22. An der zur Montagebasis 21 weisenden Oberseite 24' des zweiten Luftleitkörperelements 24 ist, vorzugsweise im Bereich der im montierten Zustand zum Fahrzeugunterboden 10 weisenden Kante 25' der inneren Stirnseite 25, zumindest ein Arretierzapfen 26 angebracht oder mit der Stirnseite 25 oder der Oberseite 24' integral ausgebildet. Dieser Arretierzapfen 26 weist an seinem freien Ende zumindest zwei hakenartige Federlaschen 26', 26" auf, die so ausgebildet sind, dass sie in rasterartig am Fahrzeugunterboden 10 oder an der Montagebasis 21 vorgesehene Löcher 27, 27', 27" einführbar sind und dort einrasten können. Im gezeigten Beispiel der Fig. 2 ist der Arretierzapfen 26 im Loch 27 eingerastet und fixiert so das zweite Luftleitkörperelement 24 in seiner nahezu vollständig in den Hohlraum 23 eingeführten Position. In dieser Konfiguration ist die Breitenerstreckung des Staukörpers 20 in Fahrzeugquerrichtung y auf die Breite des ersten Luftleitkörperelements 22 beschränkt und damit minimal.

In Fig. 3 ist eine Konfiguration des Staukörpers 20 gezeigt, bei der das zweite Luftleitkörperelement 24 etwas aus dem Hohlraum 23 herausragt und mittels des im zweiten Loch 27' eingerasteten Arretierzapfens 26 fixiert ist. Die Breite des Staukörpers 20 ist hier gegenüber der in Fig. 2 gezeigten Konfiguration vergrößert und an ein breiteres Vorderrad 12 angepasst.

In Fig. 4 ist schließlich eine Konfiguration des Staukörpers 20 gezeigt, bei der das zweite Luftleitkörperelement 24 noch weiter aus dem Hohlraum 23 herausragt und mittels des im dritten Loch 27" eingerasteten Arretierzapfens 26 fixiert ist. Die Breite des Staukörpers 20 ist hier gegenüber der in Fig. 3 gezeigten Konfiguration vergrößert und nimmt eine Maximalposition ein. Diese Konfiguration ist an ein noch breiteres Vorderrad 12 angepasst.

Die erfindungsgemäße breitenvariabel verstellbare Luftleitvorrichtung 2 reduziert nicht nur den Lagerhaltungsaufwand eines Fahrzeugherstellers und den erforderlichen Bereitstellungsraum am Fließband bei der Fahrzugfertigung, sondern ermöglicht es außerdem, bei einer späteren Umrüstung des Fahrzeugs 1 auf andere, zum Beispiel breitere, Räder die Breite des Staukörpers 20 an die neue Radbreite anzupassen. So kann auch bei späteren Umrüstungen des Fahrzeugs 1 auf einfache Weise ohne den Austausch von Fahrzeugteilen eine Anpassung der Fahrzeug-Aerodynamik vorgenommen werden.

Auch wenn im gezeigten Ausführungsbeispiel der Staukörper 20 in vereinfachter Darstellung als Barriere gezeigt ist, sind von der Erfindung selbstverständlich alle geeigneten aerodynamisch ausgestalteten Staukörper umfasst, die auf die beschriebene Weise breitenverstellbar ausgebildet sind.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Verfahren zur Verstellung einer Luftleitvorrichtung an der Unterseite eines Kraftfahrzeugs (1) vor einem Fahrzeugrad (12, 13), wobei die Luftleitvorrichtung zumindest einem Luftleitkörper (20, 20') aufweist, wobei bei der Herstellung des Kraftfahrzeugs am Fahrzeug-Montageband oder bei der nachträglichen Montage von Rädern, die sich von den herstellerseitig montierten Rädern unterscheiden, die Breite des Luftleitkörpers (20, 20') an die Räderausstattung des Kraftfahrzeugs angepasst wird, indem am Luftleitkörper (20, 20'), zumindest zwei relativ zueinander verschiebbare Luftleitkörperelemente (22, 24) vorgesehen sind, durch deren Verschiebung die Breitenerstreckung des Luftleitkörpers (20, 20') in Fahrzeugquerrichtung (y) verändert wird.

2. Verfahren nach Anspruch 1,
**dadurch gekennzeichnet,**
**dass** die relative Verschiebbarkeit der Luftleitkörperelemente (22, 24) in Raststufen ausgebildet ist, so dass unterschiedliche Breiten des Luftleitkörpers (20, 20') in Fahrzeugquerrichtung (y) einstellbar sind, wobei Rast- und/oder Fixiereinrichtungen (26, 27, 27', 27") vorgesehen sind, um die Luftleitkörperelemente (22, 24) relativ zueinander zu positionieren und/oder zu fixieren.

3. Verfahren nach Anspruch 1,
**dadurch gekennzeichnet,**
**dass** die Luftleitkörperelemente (22, 24) durch eine Klemmeinrichtung relativ zueinander fixiert werden.

4. Verfahren zur Verstellung einer Luftleitvorrichtung an der Unterseite eines Kraftfahrzeugs (1) vor einem Fahrzeugrad (12, 13), wobei die Luftleitvorrichtung zumindest einem Luftleitkörper (20, 20') aufweist, wobei bei der Herstellung des Kraftfahrzeugs am Fahrzeug-Montageband oder bei der nachträglichen Montage von Rädern, die sich von den herstellerseitig montierten Rädern unterscheiden, die Breite des Luftleitkörpers (20, 20') an die Räderausstattung des Kraftfahrzeugs angepasst wird, indem der Luftleitkörper (20, 20') zumindest zwei Luftleitkörperelemente (22, 24) aufweist, die an einer Unterstruktur nebeneinander anbringbar sind.

5. Verfahren nach einem der vorhergehenden Ansprüche,
**dadurch gekennzeichnet,**
**dass** die Luftleitvorrichtung (2) eine Montagebasis (21) aufweist, an der die Luftleitkörperelemente (22, 24) angebracht oder anbringbar sind oder mit der zumindest eines (22) der Luftleitkörperelemente integral ausgebildet ist.

6. Verfahren nach einem der vorhergehenden Ansprüche,
**dadurch gekennzeichnet,**
**dass** das Kraftfahrzeug (1) zumindest ein Vorderrad (12, 13) aufweist, wobei in Fahrtrichtung (X) vor dem Vorderrad (12, 13) zumindest eine Luftleitvorrichtung (2, 2') am Unterboden (10) des Kraftfahrzeugs (1) so angeordnet ist, dass der jeweilige Luftleitkörper (20, 20') vom Unterboden (10) zur Fahrbahn hin vorsteht.

7. Verfahren nach Anspruch 6,
**dadurch gekennzeichnet,**
**dass** das Fahrzeug (1) ein zweispuriges Fahrzeug mit zwei seitlich voneinander beabstandet am Fahrzeug (1) vorgesehenen Vorderrädern (12, 13) ist und dass vor jedem der beiden Vorderräder (12, 13) zumindest eine Luftleitvorrichtung (2, 2') nach einem der vorhergehenden Ansprüche vorgesehen ist.

8. Verfahren nach Anspruch 7,
**dadurch gekennzeichnet,**
**dass** die vor einem jeweiligen Vorderrad (12, 13) vorgesehenen Luftleiteinrichtungen (2, 2') spiegelbildlich zueinander gestaltet sind.

## Claims

1. Method for adjusting an air guiding apparatus on the underside of a motor vehicle (1) in front of a vehicle wheel (12, 13), the air guiding apparatus having at least one air guiding body (20, 20'), the width of the air guiding body (20, 20') being adapted to the wheel equipment of the motor vehicle during the production of the motor vehicle on the vehicle assembly line or during the subsequent fitting of wheels which differ from the wheels fitted by the manufacturer, by at least two air guiding body elements (22, 24) which can be displaced relative to one another being provided on the air guiding body (20, 20'), by way of the displacement of which at least two air guiding body elements (22, 24) the width extent of the air guiding body (20, 20') in the vehicle lateral direction (y) is changed.

2. Method according to Claim 1, **characterized in that** the relative displacement capability of the air guiding body elements (22, 24) is configured in latching steps, with the result that different widths of the air guiding body (20, 20') in the vehicle transverse direction (y) can be set, latching and/or fixing devices (26, 27, 27', 27") being provided, in order to position and/or to fix the air guiding body elements (22, 24) relative to one another.

3. Method according to Claim 1, **characterized in that** the air guiding body elements (22, 24) are fixed relative to one another by way of a clamping device.

4. Method for adjusting an air guiding apparatus on the underside of a motor vehicle (1) in front of a vehicle wheel (12, 13), the air guiding apparatus having at least one air guiding body (20, 20'), the width of the air guiding body (20, 20') being adapted to the wheel equipment of the motor vehicle during the production of the motor vehicle on the vehicle assembly line or during the subsequent fitting of wheels which differ from the wheels fitted by the manufacturer, by the air guiding body (20, 20') having at least two air guiding body elements (22, 24) which can be attached next to one another to a substructure.

5. Method according to one of the preceding claims, **characterized in that** the air guiding apparatus (2) has a mounting base (21), to which the air guiding body elements (22, 24) are attached or can be attached, or with which at least one (22) of the air guiding body elements is configured integrally.

6. Method according to one of the preceding claims, **characterized in that** the motor vehicle (1) has at least one front wheel (12, 13), at least one air guiding apparatus (2, 2') being arranged on the underbody (10) of the motor vehicle (1) in front of the front wheel (12, 13) in the driving direction (X) in such a way that the respective air guiding body (20, 20') projects from the underbody (10) towards the roadway.

7. Method according to Claim 6, **characterized in that** the vehicle (1) is a double-track vehicle with two front wheels (12, 13) which are provided spaced apart laterally from one another on the vehicle (1), and **in that** at least one air guiding apparatus (2, 2') according to one of the preceding claims is provided in front of each of the two front wheels (12, 13).

8. Method according to Claim 7, **characterized in that** the air guiding devices (2, 2') which are provided in front of a respective front wheel (12, 13) are of mirror-symmetrical design with respect to one another.

## Revendications

1. Procédé de réglage d'un dispositif de guidage d'air sur la face inférieure d'un véhicule automobile (1) à l'avant d'une roue de véhicule (12, 13), le dispositif de guidage d'air comportant au moins un corps de guidage d'air (20, 20'), dans lequel, lors de la fabrication du véhicule automobile sur la chaîne de montage de véhicules ou lors du montage ultérieur de roues qui diffèrent des roues montées par le fabricant, la largeur du corps de guidage d'air (20, 20') est adaptée à l'équipement de roues du véhicule automobile, par le fait qu'au moins deux éléments de corps de guidage d'air (22, 24) mobiles les uns par rapport aux autres sont prévus sur le corps de guidage d'air (20, 20'), éléments par le déplacement desquels l'étendue en largeur du corps de guidage d'air (20, 20') dans la direction transversale du véhicule (y) est modifiée.

2. Procédé selon la revendication 1,
**caractérisé en ce que**
la mobilité relative des éléments de corps de guidage d'air (22, 24) dans des gradins d'encliquetage est réalisée de telle sorte que des largeurs différentes du corps de guidage d'air (20, 20') dans la direction transversale du véhicule (y) sont réglables, des dispositifs d'encliquetage et/ou de fixation (26, 27, 27', 27") étant prévus, afin de positionner et/ou de fixer les éléments de corps de guidage d'air (22, 24) les uns par rapport aux autres.

3. Procédé selon la revendication 1,
**caractérisé en ce que**
les éléments de corps de guidage d'air (22, 24) sont fixés les uns par rapport aux autres au moyen d'un dispositif de serrage.

4. Procédé de réglage d'un dispositif de guidage d'air sur la face inférieure d'un véhicule automobile (1) à l'avant d'une roue de véhicule (12, 13), le dispositif de guidage d'air comportant au moins un corps de guidage der (20, 20'), dans lequel, lors de la fabrication du véhicule automobile sur la chaîne de montage de véhicules ou lors du montage ultérieur de roues qui diffèrent des roues montées par le fabricant, la largeur du corps de guidage d'air (20, 20') est adaptée à l'équipement de roues du véhicule automobile, par le fait que le corps de guidage d'air (20, 20') comporte au moins deux éléments de corps de guidage d'air (22, 24) qui peuvent être installés les uns à côté des autres sur une sous-structure.

5. Procédé selon l'une des revendications précédentes, **caractérisé en ce que**
le dispositif de guidage d'air (2) comporte une base de montage (21) sur laquelle les éléments de corps de guidage d'air (22, 24) sont installés ou peuvent être installés ou est réalisé d'un seul tenant avec l'au moins un (22) des éléments de corps de guidage d'air.

6. Procédé selon l'une des revendications précédentes, **caractérisé en ce que**
le véhicule automobile (1) comprend au moins une roue avant (12, 13), au moins un dispositif de guidage d'air (2, 2') étant disposé au niveau du dessous de carrosserie (10) du véhicule automobile (1) dans la direction de conduite (X) à l'avant de la roue avant (12, 13) de telle sorte que le corps de guidage d'air (20, 20') respectif fasse saillie à partir du dessous de carrosserie (10) en direction de la voie de circulation.

7. Procédé selon la revendication 6,
**caractérisé en ce que**
le véhicule (1) est un véhicule à deux voies doté de deux roues avant (12, 13) prévues de manière espacée latéralement l'une de l'autre sur le véhicule (1) et **en ce qu'**au moins un dispositif de guidage d'air (2, 2') selon l'une des revendications précédentes est prévu à l'avant de chacune des deux roues avant (12, 13).

8. Procédé selon la revendication 7,
**caractérisé en ce que**
les dispositifs de guidage d'air (2, 2') prévus à l'avant d'une roue avant (12, 13) respective sont configurés en symétrie miroir les uns par rapport aux autres.
